# EUROPEAN PATENT SPECIFICATION

(11) **EP 2 799 480 B1**
(45) Date of publication and mention of the grant of the patent: **18.05.2016**
(21) Application number: 14161990.8
(22) Date of filing: 27.03.2014
(51) Int. Cl.: C08L 7/00

(54) **Rubber composition for tire and pneumatic tire**
Kautschukzusammensetzung für Reifen und Luftreifen damit
Composition de caoutchouc pour pneu et pneu

(30) Priority: 30.04.2013 JP 2013095531
(43) Date of publication of application: 05.11.2014
(73) Proprietor: Sumitomo Rubber Industries, Ltd., Kobe-shi, Hyogo 651-0072 (JP)
(72) Inventor: Miyazaki, Tatsuya, Kobe-shi,, Hyogo 651-0072 (JP); Tokimune, Ryuichi, Kobe-shi,, Hyogo 651-0072 (JP)
(74) Representative: Manitz, Finsterwald & Partner GbR

(56) References cited:
- EP-A1- 2 103 650
- EP-A1- 2 258 770
- EP-A1- 2 270 088
- US-A1- 2011 144 236
- US-A1- 2011 306 677
- US-A1- 2013 331 498

## Description

### BACKGROUND OF THE INVENTION

### Field of the Invention

The present invention relates to a rubber composition for tires, and pneumatic tires using the rubber composition.

### Description of the Background Art

As a method for improving grip performance or abrasion resistance exhibited by a rubber composition, a method has been known in which a resin such as an α-methyl styrene resin or a coumarone-indene resin is blended and used (see, for example, Japanese Laid-Open Patent Publication No. 2013-1805). "SA85", manufactured by Arizona Chemical Company, which is generally used as the α-methyl styrene resin, has been originally developed for a rubber composition, for summer tires, which contains a styrene-butadiene rubber (SBR) and a butadiene rubber (BR). However, in recent years, "SA85" is also blended in a rubber composition containing a large amount of natural rubber (NR).

However, when "SA85" or a coumarone-indene resin is blended in a rubber composition containing a large amount of NR, a hardness (Hs) at a low temperature is enhanced. Therefore, wet grip performance at a low µ paved surface cannot be improved, or performance on ice and snow is degraded, and there is room for improvement. In particular, a resin has not been known which enables improvement of both wet grip performance and performance on ice and snow, in a rubber composition, for studless tires or winder tires, in which an amount of NR in 100% by mass of a rubber component is greater than or equal to 30% by mass.

EP 2 270 088 A1 discloses rubber compositions for tires, in particular for tire treads, which contain a rubber component and a terpene phenol resin.

US 2011/0306677 A1 is directed to adhesive compositions, which include for instance polyisoprene and a terpene type resin.

EP 2 258 770 A1 is directed to rubber compositions for inner liners, which include a terpene-based resin.

EP 2 103 650 A1 describes rubber compositions including a terpene resin having a softening point of not less than 130°C.

US 2011/0144236 A1 is directed to rubber compositions for treads of pneumatic tires, contain for example natural rubber, butadiene rubber, modified styrene butadiene rubber and an aromatic modified terpene resin.

### SUMMARY OF THE INVENTION

The present invention is made in order to solve the above problems, and an object of the present invention is to provide: a rubber composition, for tires, which allows improvement of both wet grip performance and performance on ice and snow, and further allows abrasion resistance and elongation at break to be advantageously obtained; and a pneumatic tire using the rubber composition.

The present invention is directed to a rubber composition for a tire in which the content of an isoprene-based rubber in 100% by mass of a rubber component ranges from 10% by mass to 100% by mass, the content of a butadiene rubber in 100% by mass of the rubber component ranges from 0% by mass to 80% by mass, the content of a styrene butadiene rubber in 100% by mass of the rubber component ranges from 0% by mass to 70% by mass, and the content of a terpene-based resin having a hydroxyl value that is less than or equal to 20 and a softening point ranging from 106°C to 124°C ranges from 1 part by mass to 50 parts by mass, per 100 parts by mass of the rubber component, wherein the rubber composition further includes silica and carbon black, wherein the total content of silica and carbon black ranges from 60 parts by mass to 140 parts by mass, per 100 parts by mass of the rubber component.

An SP (solubility parameter) value of the terpene-based resin is preferably less than or equal to 8.6.

Preferably, a content of the isoprene-based rubber in 100% by mass of the rubber component ranges from 25% by mass to 65% by mass, a content of the butadiene rubber in 100% by mass of the rubber component ranges from 35% by mass to 75% by mass, and a content of the terpene-based resin in 100 parts by mass of the rubber component ranges from 1 part by mass to 30 parts by mass.

The hydroxyl value of the terpene-based resin is preferably less than or equal to 15.

An amount of a pure sulfur component derived from a crosslinking agent is preferably less than or equal to 1.30 parts by mass, per 100 parts by mass of the rubber component.

The rubber composition is preferably used for a tread.

The present invention is also directed to a pneumatic tire produced by using the rubber composition.

In the rubber composition, for tires, according to the present invention, a predetermined amount of the terpene-based resin having a specific hydroxyl value and softening point is blended in the rubber component in which the isoprene-based rubber, the BR and the SBR are each contained by an amount within a given range. Therefore, a pneumatic tire is provided in which wet grip performance, performance on ice and snow, abrasion resistance, and elongation at break are improved in a balanced manner.

### DESCRIPTION OF THE PREFERRED EMBODIMENTS

A rubber composition of the present invention includes at least an isoprene-based rubber, and a terpene-based resin having a specific hydroxyl value and softening point, and optionally includes a BR and/or an SBR. By the isoprene-based rubber being blended in a rubber composition including an isoprene-based rubber, wet grip performance, performance on ice and snow, abrasion resistance, and elongation at break can be improved in a balanced manner.

Most of monomers of the terpene-based resin are the same as monomers of an isoprene-based rubber, and an SP value of the terpene-based resin is approximate to that of an isoprene-based rubber. Therefore, the terpene-based resin has a high compatibility with an isoprene-based rubber, and is excellent in that the terpene-based resin is well blended and dispersed in the isoprene-based rubber during kneading (the terpene-based resin is preferentially dispersed in the isoprene-based rubber). It is considered that, by the terpene-based resin and a rubber component containing an isoprene-based rubber being blended, the terpene-based resin is preferentially blended with the isoprene-based rubber, a fine sea-island structure is formed in the isoprene-based rubber, and a filler such as silica can be uniformly dispersed in each phase. It is assumed that these actions allow an effect of improving wet grip performance, performance on ice and snow, abrasion resistance, and elongation at break to be obtained. Namely, it is considered that a mechanism for improving these performances by the present invention is obtained by the following three factors (1) to (3). Specifically, (1) rubber morphology becomes fine, (2) silica is appropriately distributed (dispersed) in an isoprene-based rubber phase, and (3) the terpene-based resin is dispersed in the isoprene-based rubber more preferentially than a BR or an SBR is, and therefore Tg of the BR phase in which hardness is low at a low temperature is less likely to be enhanced.

A hydroxyl value (mgKOH/g-gel) of the terpene-based resin is less than or equal to 20, preferably less than or equal to 15, more preferably less than or equal to 5, even more preferably less than or equal to 1, and particularly preferably 0. When the hydroxyl value is greater than 20, an effect of improving wet grip performance, performance on ice and snow, abrasion resistance, and elongation at break tends to become insufficient.

The hydroxyl value of the terpene-based resin is represented, by milligram, as an amount of potassium hydroxide that is required to neutralize acetic acid obtained by bonding to hydroxyl groups when 1g of the terpene-based resin is acetylated, and is measured by the potentiometric titration (JIS K0070: 1992). Therefore, in general, the hydroxyl value of a terpene-based resin that does not contain a phenol compound is zero.

A softening point of the terpene-based resin is in a range from 106°C to 124°C. When the softening point is outside the range, an effect of improving wet grip performance, performance on ice and snow, abrasion resistance, and elongation at break tends to become insufficient.

The softening point of the terpene-based resin is a softening point measured, by using the ring and ball softening point measuring apparatus, in compliance with JIS K 6220-1: 2001, as a temperature at which the ball drops.

From the viewpoint that an effect of improving each performance can be enhanced, an SP value of the terpene-based resin is preferably less than or equal to 8.6, and more preferably less than or equal to 8.4, and is preferably not less than 8.1.

The SP value represents a solubility parameter calculated by the Hoy's method based on a structure of a compound. The Hoy's method is a calculation method described in, for example, K. L. Hoy "Table of Solubility Parameters", Union Carbide Corp., Solvent and Coatings Materials Research and Development Department, (1985).

As the terpene-based resin, for example, a polyterpene resin obtained by polymerization of terpene compounds, or an aromatic modified terpene resin obtained by polymerization of a terpene compound with an aromatic compound, may be used. Further, a hydrogenated product thereof may be used.

The polyterpene resin is a resin obtained by polymerization of terpene compounds. The terpene compound is a hydrocarbon represented by a composition of (C₅H₈)ₐ or an oxygen-containing derivative thereof. The terpene compound is a compound having, as a basic skeleton, a terpene classified as a monoterpene (C₁₀H₁₆), a sesquiterpene (C₁₅H₂₄), a diterpene (C₂₀H₃₂), or the like. Examples of the terpene compound include α-pinene, β-pinene, dipentene, limonene, myrcene, allo-ocimene, ocimene, α-phellandrene, α-terpinene, γ-terpinene, terpinolene, 1,8-cineole, 1,4-cineole, α-terpineol, β-terpineol, and γ-terpineol.

Examples of the polyterpene resin include pinene resins, limonene resins, dipentene resins, and pinene/limonene resins in each of which the terpene compound as described above is used as a material. Among them, pinene resins are preferably used from the viewpoint that polymerization reaction is easily performed, and cost is low since natural pine resin is the material. In general, the pinene resin contains both α-pinene and β-pinene which are isomeric with each other. Depending on contained components, the pinene resin is classified into a β-pinene resin containing β-pinene as a main component, and an α-pinene resin containing α-pinene as a main component. In the present invention, the β-pinene resin can be preferably used.

Examples of the aromatic modified terpene resin include terpene phenolic resins containing the above-described terpene compounds and phenol compounds as materials, and terpene styrene resins containing the above-described terpene compounds and styrene-based compounds as materials. Further, terpene phenol styrene resins containing the above-described terpene compounds, phenol compounds, and styrene-based compounds as materials, may be used. Examples of the phenol compound include phenol, bisphenol A, cresol, and xylenol. Examples of the styrene-based compound include styrene and α-methyl styrene.

From the viewpoint that the effect of the present invention is advantageously obtained, the polyterpene resin is preferably used as the terpene-based resin, and the β-pinene resin is more preferably used as the terpene-based resin.

A content of the terpene-based resin in 100 parts by mass of the rubber component is in a range from 1 part by mass to 50 parts by mass. When the content of the terpene-based resin is outside the range, the effect of improving the performances is not obtained, and the performances tend to be rather degraded. The content of the terpene-based resin is preferably greater than or equal to 2 parts by mass, and more preferably greater than or equal to 5 parts by mass, and is preferably not greater than 30 parts by mass, and more preferably not greater than 25 parts by mass.

The rubber composition of the present invention contains, as the rubber component, the isoprene-based rubber, and optionally a BR and/or an SBR. From the viewpoint that the effect of the present invention is advantageously obtained, the isoprene-based rubber and the BR are preferably used, as the rubber component, in combination.

Examples of the isoprene-based rubber include synthetic isoprene rubbers (IR), natural rubbers (NR), and modified natural rubbers. Examples of the NR include deproteinized natural rubbers (DPNR), and ultra pure natural rubbers (UPNR). Examples of the modified natural rubber include epoxidized natural rubbers (ENR), hydrogenated natural rubbers (HNR), and grafted natural rubbers. As the NR, specifically, "SIR20", "RSS#3", "TSR20", and the like, which are generally used in tire industries, can be used. Among them, the NRs and the synthetic isoprene rubbers are preferably used from the viewpoint that the SP values of the NRs and the synthetic isoprene rubbers are approximate to the SP value of the terpene-based resin, and compatibility thereof with the terpene-based resin is excellent.

A content of the isoprene-based rubber in 100% by mass of the rubber component is greater than or equal to 10% by mass, preferably greater than or equal to 25% by mass, and more preferably greater than or equal to 30% by mass. When the content of the isoprene-based rubber is less than 10% by mass, an elongation at break and abrasion resistance may not be sufficiently obtained. The content of the isoprene-based rubber in 100% by mass of the rubber component may be 100% by mass. However, from the viewpoint that wet grip performance, performance on ice and snow, abrasion resistance, and elongation at break are obtained in a balanced manner, the content of the isoprene-based rubber is preferably not greater than 85% by mass, more preferably not greater than 65% by mass, and even more preferably not greater than 50% by mass.

As the BR, a BR which is generally used in tire industries, can be used. For example, a high cis content BR such as BR150B manufactured by Ube Industries, Ltd., a 1,2-syndiotactic polybutadiene crystal (SPB)-containing BR such as VCR412 manufactured by Ube Industries, Ltd., a high vinyl content BR such as Europrene BR HV80 manufactured by Polimeri Europa, and a high cis content BR (rare earth BR) which is synthesized by using a rare earth element catalyst, can be used. Among them, the rare earth BR is preferably used from the viewpoint that abrasion resistance can be advantageously obtained.

As the rare earth BR, a publicly known conventional rare earth BR can be used. For example, a BR synthesized by using a rare earth element catalyst (a catalyst containing a lanthanum series rare earth element compound, an organoaluminium compound, an aluminoxane, or a halogen-containing compound, optionally with a Lewis base) or the like, can be used. Among them, an Nd-BR synthesized by using a neodymium catalyst is preferably used from the viewpoint that abrasion resistance can be advantageously obtained.

A content of the BR in 100% by mass of the rubber component is less than or equal to 80% by mass, preferably less than or equal to 75% by mass, and more preferably less than or equal to 70% by mass. When the content of the BR is greater than 80% by mass, the content of the isoprene-based rubber is reduced, whereby elongation at break and abrasion resistance may not be sufficiently obtained. The content of the BR in 100% by mass of the rubber component may be 0% by mass. However, from the viewpoint that abrasion resistance and performance on ice and snow can be advantageously obtained, the content of the BR is preferably not less than 15% by mass, more preferably not less than 35% by mass, and even more preferably not less than 50% by mass.

The SBR is not limited to any specific one. A publicly known conventional SBR, such as a solution-polymerized SBR or an emulsion-polymerized SBR, can be used. In particular, various modified SBRs for silica are preferably used. As the modified SBR for silica, SBRs obtained by modifying terminals and/or main chains of polymers by various modifiers, can be used. Specific examples of the modified SBR for silica include modified SBRs described in, for example, Japanese Laid-Open Patent Publication Nos. 2010-077412, 2006-274010, 2009-227858, 2006-306962, and 2009-275178. Among then, a modified SBR obtained by reaction of a modifier represented by the following general formula (I), can be preferably used. 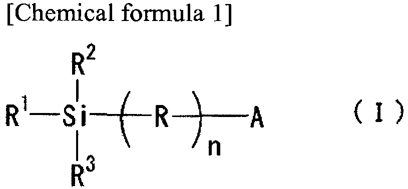 (wherein n represents an integer ranging from 1 to 10, R represents a bivalent hydrocarbon group represented as, for example, -CH₂-, R¹, R², and R³ each independently represent a hydrocarbyl group having 1 to 4 carbon atoms or a hydrocarbyloxy group having 1 to 4 carbon atoms, at least one of R¹, R², and R³ represents a hydrocarbyloxy group, and A represents a functional group having a nitrogen atom.)

A content of the SBR in 100% by mass of the rubber component is less than or equal to 70% by mass, and preferably less than or equal to 65% by mass. When the content of the SBR is greater than 70% by mass, the content of the isoprene-based rubber or the BR is reduced, whereby abrasion resistance may not be sufficiently obtained. The content of the SBR in 100% by mass of the rubber component may be 0% by mass. However, from the viewpoint that wet grip performance for tires for passenger cars can be advantageously obtained, the content of the SBR is preferably not less than 15% by mass, and more preferably not less than 25% by mass.

The rubber composition of the present invention contains a silica and a carbon black as a filler. The silica and the carbon black are not limited to any specific ones. A silica and a carbon black that are generally used in tire industries can be used:

From the viewpoint that reinforcing effect and balanced dispersion are advantageously obtained, a nitrogen adsorption specific surface area (N₂SA) of the silica is preferably greater than or equal to 80 m²/g and more preferably greater than or equal to 110 m²/g, and preferably not greater than 260 m²/g and more preferably not greater than 240 m²/g. For the same reason, an N₂SA of the carbon black is preferably greater than or equal to 60 m²/g and more preferably greater than or equal to 100 m²/g, and preferably not greater than 200 m²/g and more preferably not greater than 180 m²/g.

In the description herein, the N₂SA of the silica is a value determined by the BET method in compliance with the ASTM D3037-81, and the N₂SA of the carbon black is a value determined in compliance with JIS K 6217-2: 2001.

From the viewpoint that wet grip performance and reduction in fuel consumption are favorable, a content of the silica in 100 parts by mass of the rubber component is preferably greater than or equal to 30 parts by mass and more preferably greater than or equal to 55 parts by mass, and preferably not greater than 135 parts by mass, more preferably not greater than 125 part by mass, and even more preferably not greater than 115 parts by mass. For the same reason, a content of the carbon black in 100 parts by mass of the rubber component is preferably greater than or equal to 1 part by mass and more preferably greater than or equal to 3 parts by mass, and preferably not greater than 50 parts by mass, more preferably not greater than 30 parts by mass, and even more preferably not greater than 10 parts by mass.

According to the present invention, the total content of both the silica and the carbon black in 100 parts by mass of the rubber component is greater than or equal to 60 parts by mass and preferably greater than or equal to 65 parts by mass, and not greater than 140 parts by mass, preferably not greater than 135 parts by mass, and more preferably not greater than 130 parts by mass.

The rubber composition of the present invention preferably contains a silane coupling agent. As the silane coupling agent, for example, a compound containing sulfur (sulfide bond) which has been conventionally used in combination with a silica in rubber industries can be used. For example, a sulfide type silane coupling agent, a mercapto type silane coupling agent, a vinyl type silane coupling agent, an amino type silane coupling agent, a glycidoxy silane coupling agent, a nitro type silane coupling agent, a chloro type silane coupling agent, or the like can be used. Specifically, "Si69" and "Si75" manufactured by Evonik are commercially available.

Further, as the silane coupling agent, a compound represented by the following formula can be preferably used. As the compound represented by the following formula, for example, NXT manufactured by Momentive is commercially available.

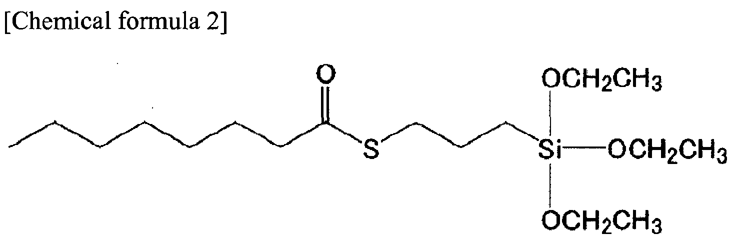

A content of the silane coupling agent in 100 parts by mass of the silica is preferably greater than or equal to 1 part by mass, and more preferably greater than or equal to 3 parts by mass. When the content of the silane coupling argent is less than 1 part by mass, abrasion resistance and elongation at break tend to be degraded. The content of the silane coupling agent is preferably not greater than 15 parts by mass and more preferably not greater than 12 parts by mass. When the content of the silane coupling agent is greater than 15 parts by mass, an effect that is worth an increase in cost may not be obtained.

The rubber composition of the present invention preferably contains a crosslinking agent. As the crosslinking agent, for example, a sulfur-containing compound, such as a sulfur crosslinking agent or a sulfur-containing hybrid crosslinking agent, which allows a crosslinking reaction, can be used.

As the sulfur crosslinking agent, a sulfur that is generally used for vulcanization in rubber industries can be used. Specifically, powdery sulfur, precipitated sulfur, colloidal sulfur, insoluble sulfur, highly dispersible sulfur, or the like, can be used.

Examples of the sulfur-containing hybrid crosslinking agent include alkyl sulfide crosslinking agents such as alkylphenol-sulfur chloride condensates, 1,6-hexamethylene sodium dithiosulfate dihydrate, and 1,6-bis(N,N'-dibenzylthiocarbamoyldithio)hexane, and dithiophosphate. Specifically, TACKIROL (registered trademark) V200 manufactured by TAOKA CHEMICAL COMPANY, LIMITED, DURALINK (registered trademark) HTS manufactured by Flexsys, VULCUREN (registered trademark) VP KA9188 manufactured by LANXESS, RHENOGRAN (registered trademark) SDT-50 (Dithiophosphoryl polysulfide) manufactured by Rhein Chemie, and the like are commercially available.

In the rubber composition of the present invention, an amount of pure sulfur component derived from the crosslinking agent is preferably less than or equal to 1.30 parts by mass and more preferably less than or equal to 1.20 parts by mass, per 100 parts by mass of the rubber component. When the amount of the pure sulfur component is greater than 1.30 parts by mass, abrasion resistance tends to be degraded. The amount of the pure sulfur component derived from the crosslinking agent is preferably not less than 0.30 parts by mass, and more preferably not less than 0.50 parts by mass, per 100 parts by mass of the rubber component. When the amount of the pure sulfur component is less than 0.30 parts by mass, crosslinking reaction among polymers does not sufficiently proceed, whereby hardness may be lowered.

In the description herein, the amount of the pure sulfur component derived from the crosslinking agent represents a total amount of the entire sulfur component contained in the entire crosslinking agent applied in final kneading (finish-kneading).

The rubber composition of the present invention preferably contains aluminium hydroxide. The aluminium hydroxide is not limited to any specific one, and may be aluminium hydroxide that is generally used in tire industries.

An average particle diameter of the aluminium hydroxide is preferably less than or equal to 0.69 µm, more preferably less than or equal to 0.65 µm, and even more preferably less than or equal to 0.62 µm, and preferably not less than 0.20 µm and more preferably not less than 0.25 µm, from the viewpoint that abrasion resistance and wet grip performance can be advantageously obtained.

The average particle diameter of the aluminium hydroxide is a number average particle diameter and is measured by a transmission electron microscope.

A nitrogen adsorption specific surface area (N₂SA) of the aluminium hydroxide is preferably greater than or equal to 10 m²/g, more preferably greater than or equal to 12 m²/g, and even more preferably greater than or equal to 14 m²/g, and preferably not greater than 45 m²/g, more preferably not greater than 40 m²/g, even more preferably not greater than 29 m²/g, and particularly preferably not greater than 19 m²/g, from the viewpoint that abrasion resistance and wet grip performance can be advantageously obtained.

The N₂SA of the aluminium hydroxide is a value determined by the BET method in compliance with ASTM D3037-81.

A content of the aluminium hydroxide in 100 parts by mass of the rubber component is preferably greater than or equal to 1 part by mass, more preferably greater than or equal to 2 parts by mass, and even more preferably greater than or equal to 3 parts by mass. When the content of the aluminium hydroxide is less than 1 part by mass, an effect of improvement by the aluminium hydroxide tends to become insufficient. The content of the aluminium hydroxide is preferably not greater than 30 parts by mass, more preferably not greater than 20 parts by mass, and even more preferably not greater than 10 parts by mass. When the content of the aluminium hydroxide is greater than 30 parts by mass, abrasion resistance may not be sufficiently obtained.

In the rubber composition of the present invention, in addition to the components described above, compounding ingredients, such as zinc oxide, stearic acid, a processing aid, an anti-aging agent, a wax, an oil, an adhesive resin, and a vulcanization accelerator, which are generally used in the rubber composition manufacturing, may be blended as appropriate.

The rubber composition of the present invention is manufactured in a generally used method. Namely, for example, the components described above are kneaded by using a Banbury mixer, a kneader, an open roll, or the like, and thereafter vulcanized, to manufacture the rubber composition. The rubber composition can be advantageously used for tire treads.

A pneumatic tire of the present invention is manufactured, by using the rubber composition described above, in a generally used method.

Namely, the rubber composition in which the above components are blended is extruded and processed in an unvulcanized state so as to correspond to a shape of each tire member such as a tread, and formed together with other tire members in a tire forming machine in a generally used method, thereby forming an unvulcanized tire. The unvulcanized tire is heated and pressurized in a vulcanizing machine, thereby obtaining a tire.

The pneumatic tire of the present invention is advantageously used as tires for passenger cars, tires for large passenger cars and large SUVs, heavy-duty tires for trucks and buses, and tires for light trucks. The pneumatic tire of the present invention can be used as winter tires and studless tires of each of the vehicles described above.

### [Examples]

The present invention will be specifically described based on examples. However, the present invention is not limited to examples only.

### <Production of terminal modifier>

23.6 g of 3-(N,N-dimethylamino)propyltrimethoxysilane (manufactured by AZmax) was put into a 100 ml measuring flask in a nitrogen atmosphere, and hexanoic anhydride (manufactured by KANTO CHEMICAL CO., INC.) was added thereto such that the total amount was 100 ml, thereby producing a terminal modifier.

### <Copolymer production example 1>

18L of n-hexane, 740 g of styrene (manufactured by KANTO CHEMICAL CO., INC.), 1260 g of butadiene, and 10 mmol of tetramethylethylenediamine were added in a 30L pressure resistant vessel having been sufficiently purged with nitrogen, and a temperature was increased to 40°C. Next, 10 mL of butyllithium was added thereto, a temperature was thereafter increased to 50°C, and the mixture was stirred for three hours. Next, 11 mL of the above terminal modifier was added to the mixture and the mixture was stirred for 30 minutes. 15 mL of methanol and 0.1 g of 2,6-tert-butyl-p-cresol were added to a reaction solution. Thereafter, the reaction solution was put into a stainless-steel vessel containing 18 L of methanol to collect aggregates. The obtained aggregates were depressurized and dried for 24 hours, to obtain a modified SBR.

Hereinafter, various chemicals used in examples and comparative examples are collectively described. The terpene-based resins (1) to (3) were selected from among industrial products having the same product number, and used.
NR: TSR20
IR: IR2200 manufactured by JSR Corporation
   BR (1): CB25 (high-cis BR synthesized by using an Nd catalyst, Tg: -110°C) manufactured by LANXESS
   BR (2): BR150B (high-cis BR synthesized by using a Co catalyst, Tg: -108°C) manufactured by Ube Industries, Ltd.
SBR: modified SBR (an amount of styrene: 27% by mass, an amount of vinyl: 58% by mass, Tg: -27°C) produced in Copolymer production example 1
   Carbon black (1): HP160 (N₂SA: 165 m²/g) manufactured by Columbia Carbon
   Carbon black (2): SHOBLACK (registered trademark) N220 (N₂SA: 114 m²/g) manufactured by Cabot Japan K. K.
      Silica (1): ULTRASIL (registered trademark) VN3 (N₂SA: 175 m²/g) manufactured by Evonik
      Silica (2): Z1085 (N₂SA: 83 m²/g) manufactured by Rhodia
      Silica (3): ULTRASIL (registered trademark) U9000Gr (N₂SA:230 m²/g) manufactured by Evonik
Aluminium hydroxide: ATH#B (average particle diameter: 0 60 µm, N₂SA: 15 m²/g) manufactured by Sumitomo Chemical Company, Limited
   Terpene-based resin (1): YS resin PX1150N (softening point: 115°C, Tg: 62°C, hydroxyl value: 0, SP value: 8.26, β-pinene resin, lot # 1) manufactured by YASUHARA CHEMICAL CO., LTD.
   Terpene-based resin (2): YS resin PX1150N (softening point: 107°C, Tg: 54°C, hydroxyl value: 0, SP value: 8.26, β-pinene resin, lot # 2 (one in a lot different from that of the terpene-based resin (1)) manufactured by YASUHARA CHEMICAL CO., LTD.
   Terpene-based resin (3): YS resin PX1150N (softening point: 121°C, Tg: 68°C, hydroxyl value: 0, SP value: 8.26, β-pinene resin, lot # 3 (one in a lot different from that of the terpene-based resin (1)) manufactured by YASUHARA CHEMICAL CO., LTD.
   Terpene-based resin (4): YS resin PX1250 (softening point: 125°C, Tg: 69°C, hydroxyl value: 0, SP value: 8.26, β-pinene resin) manufactured by YASUHARA CHEMICAL CO., LTD.
   Terpene-based resin (5): YS resin PX1000 (softening point: 100°C, Tg: 50°C, hydroxyl value: 0, SP value: 8.26, β-pinene resin) manufactured by YASUHARA CHEMICAL CO., LTD.
   Terpene-based resin (6): YS resin PX800 (softening point: 80°C, Tg: 32°C, hydroxyl value: 0, SP value: 8.26, β-pinene resin) manufactured by YASUHARA CHEMICAL CO., LTD.
   Terpene-based resin (7): YS resin A800 (softening point: 80°C, hydroxyl value: 0, SP value: 8.26, α-pinene resin) manufactured by YASUHARA CHEMICAL CO., LTD.
   Terpene-based resin (8): YS resin PX300N (softening point: 30°C, hydroxyl value: 0, SP value: 8.26, liquid at room temperature, β-pinene resin) manufactured by YASUHARA CHEMICAL CO., LTD.
   Terpene-based resin (9): SYLVARES (registered trademark) TRB115 (softening point: 116°C, Tg: 70°C, hydroxyl value: 0, SP value: 8.26, polyterpene resin) manufactured by Arizona Chemical Company
   Terpene-based resin (10): SYLVARES (registered trademark) TRB125 (softening point: 125°C, Tg: 80°C, hydroxyl value: 0, SP value: 8.26, polyterpene resin) manufactured by Arizona Chemical Company
   Terpene-based resin (11): YS resin TO115 (softening point: 115°C, hydroxyl value: 0, SP value: 8.73, terpene styrene resin) manufactured by YASUHARA CHEMICAL CO., LTD.
   Terpene-based resin (12): YS resin TO105 (softening point: 105°C, Tg: 45°C, hydroxyl value: 0, SP value: 8.73, terpene styrene resin) manufactured by YASUHARA CHEMICAL CO., LTD.
   Terpene-based resin (13): CLEARON (registered trademark) P115 (softening point: 115°C, Tg: 61°C, hydroxyl value: 0, SP value: 8.36, hydrogenated polyterpene resin) manufactured by YASUHARA CHEMICAL CO., LTD.
   Terpene-based resin (14): YS Polyster T115 (softening point: 115°C, Tg: 57°C, hydroxyl value: 65, SP value: 8.81, terpene phenolic resin) manufactured by YASUHARA CHEMICAL CO., LTD.
   Terpene-based resin (15): SYLVARES (registered trademark) TP115 (softening point: 115°C, Tg: 55°C, hydroxyl value: 50, terpene phenolic resin) manufactured by Arizona Chemical Company Petroleum resin: SYLVARES (registered trademark) SA85 (softening point: 85°C, Tg: 43°C) manufactured by Arizona Chemical Company
Paraffin oil: Process P-200 manufactured by Japan Energy
TDAE oil: VIVATEC 500 manufactured by H&R
Wax: OZOACE (registered trademark) 0355 manufactured by NIPPON SEIRO CO., LTD. Anti-aging agent 6PPD: ANTIGENE (registered trademark) 6C (N-(1,3-dimethylbutyl)-N'-phenyl-p-phenylenediamine) manufactured by Sumitomo Chemical Company, Limited Anti-aging agent TMQ: NOCRAC (registered trademark) 224 (2,2,4-trimethyl-1,2-dihydroquinoline polymer) manufactured by Ouchi Shinko Chemical Industrial Co., Ltd.
Stearic acid: stearic acid "Tsubaki" manufactured by NOF CORPORATION
Zinc oxide: GINREI (registered trademark) R manufactured by Toho Zinc Co., Ltd.
   Silane coupling agent (1): NXT manufactured by Momentive
   Silane coupling agent (2): Si75 manufactured by Evonik
Sulfur-containing hybrid crosslinking agent: VULCUREN (registered trademark) VP KA9188 (1,6-bis(N,N'-dibenzylthiocarbamoyldithio)hexane) (amount of sulfur: 20.6%) manufactured by LANXESS
Sulfur crosslinking agent: HK-200-5 (5% oil-containing powdery sulfur) manufactured by Hosoi Chemical Industry Co., Ltd.
Vulcanization accelerator TBBS: NOCCELER (registered trademark) NS-G (N-tert-butyl-2-benzothiazolylsulfenamide) manufactured by Ouchi Shinko Chemical Industrial Co., Ltd.
Vulcanization accelerator DPG: NOCCELER (registered trademark) D (1,3-diphenylguanidine) manufactured by Ouchi Shinko Chemical Industrial Co., Ltd.

### <Examples and Comparative examples>

In each of examples and comparative examples, the entire amount of each of the rubber component and the carbon black, and half the amount of each of the silica and the silane coupling agent were firstly kneaded, according to the amounts indicated in Table 1 or 2, by using a Banbury mixer, at 150°C for five minutes (X-kneading: first kneading). Thereafter, the remaining materials other than the crosslinking agent and the vulcanization accelerator were added to the kneaded mixture to perform kneading at 150°C for four minutes (Y-kneading: second kneading), to obtain a kneaded product. Next, the crosslinking agent and the vulcanization accelerator were added to the obtained kneaded product, to perform kneading, by using an open roll, at 105°C for four minutes (F-kneading: finish kneading), to obtain un unvulcanized rubber composition.

The unvulcanized rubber composition having been obtained was press-vulcanized at 170°C for 12 minutes, to obtain a vulcanized rubber composition.

Further, the unvulcanized rubber composition having been obtained was extruded and formed so as to be tread-shaped, were adhered to other tire members in a tire forming machine, and was vulcanized at 170°C for 12 minutes, to obtain a test tire (tire size: 245/40R18, studless tire for passenger cars).

The following evaluations were made with the use of the vulcanized rubber composition and the test tire having been obtained. The evaluation results are indicated in Tables 1 and 2.

### (Hardness)

A hardness (Shore A) of the vulcanized rubber composition was measured at 23°C by using a type A durometer in compliance with JIS K6253 "Rubber, vulcanized or thermoplastic - Determination of hardness".

In order to ensure safety (steering stability), amounts of components to be blended were adjusted such that the hardness indicates a value in a given range in examples and comparative examples. Comparison of elongation at break can be appropriately performed only by adjusting the hardness so as to be within the given range.

### (Tensile Test)

Tensile test was conducted at room temperature by using a No. 3 dumbbell type test piece formed by the vulcanized rubber composition in compliance with JIS K6251 "Rubber, vulcanized or thermoplastic - Determination of tensile stress-strain properties", to measure an elongation at break EB (%). The greater the EB is, the more excellent durability is.

### (Wet grip performance)

The test tires were mounted to a domestically-produced FR car having an engine displacement of 2000 cc, and the car was actually caused to run 10 laps on a test course of a wet asphalt road surface. At this time, a test driver made a sensory evaluation for stability of control at steering, and a result of the evaluation was indicated as an index with the value of comparative example 10 being 100. The greater the index is, the more excellent wet grip performance is.

### (Abrasion resistance)

The test tires were mounted to a domestically-produced FR car having an engine displacement of 2000 cc, and the car was actually caused to run on a test course of a dry asphalt road surface. A position at which a control tire was mounted to the car and a position at which the test tire was mounted to the car were swapped at intervals of 1000 km, to average causes of abrasion by the running car. A groove depth (8.0 mm in the case of a new tire) of a tire tread rubber in the test tire was measured after 30000 km running, and was indicated as an index with the value of comparative example 10 being 100. The greater the index is, the less an amount of worn rubber is, that is, the more excellent abrasion resistance is.

### (Braking performance on ice)

The test tires were mounted to a domestically-produced FR car having an engine displacement of 2000 cc, and a running distance required for decreasing a speed from 50 kph to 10 kph in an ABS braking mode, was measured, and was indicated as an index with the value of comparative example 10 being 100. The greater the index is, the more excellent braking performance on ice is.

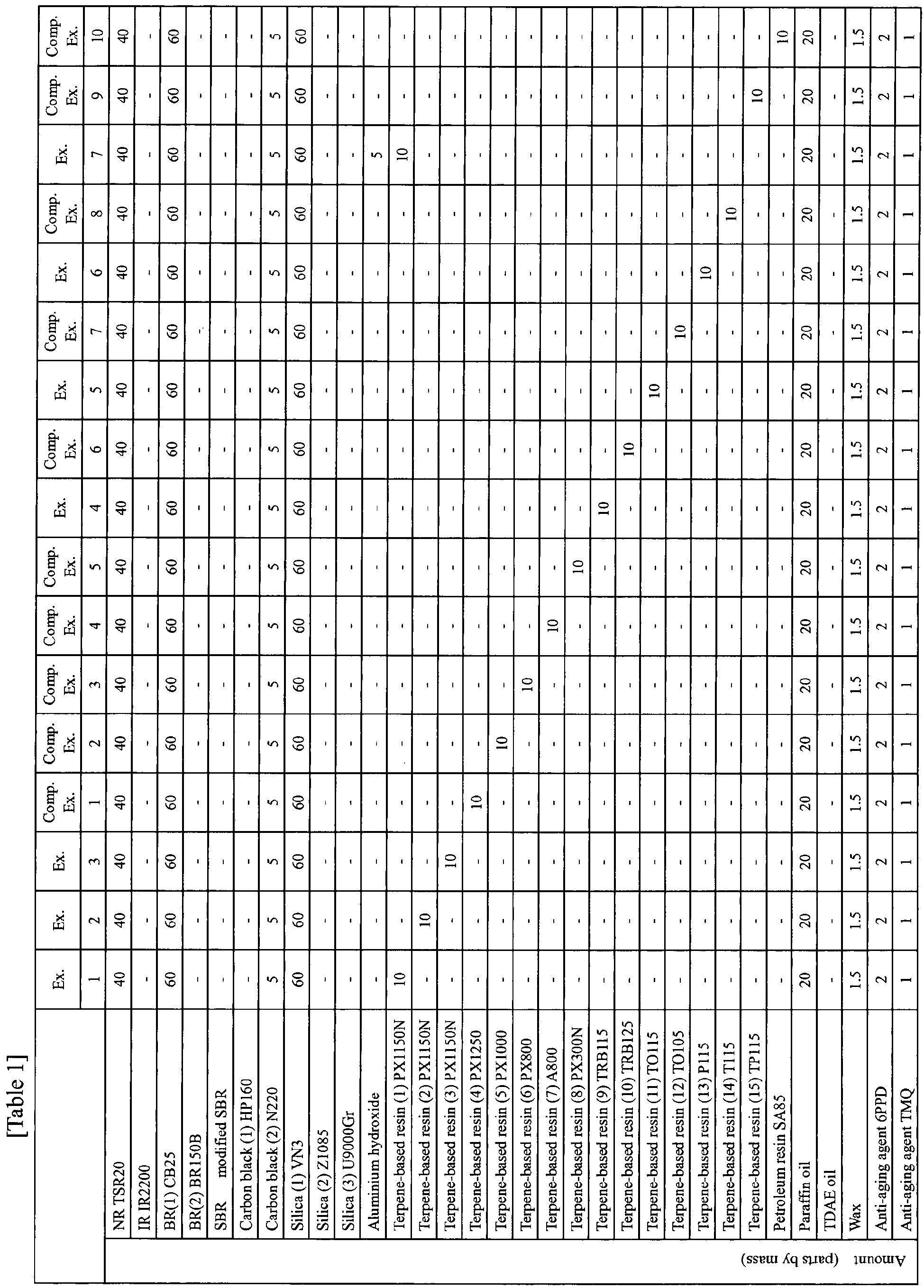

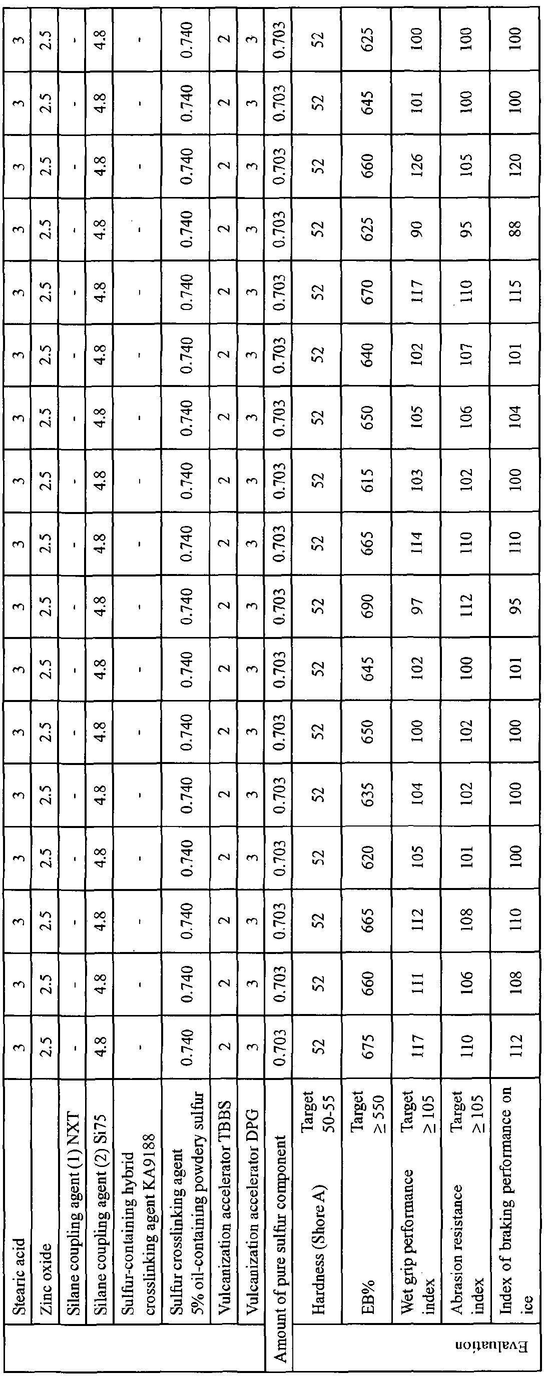

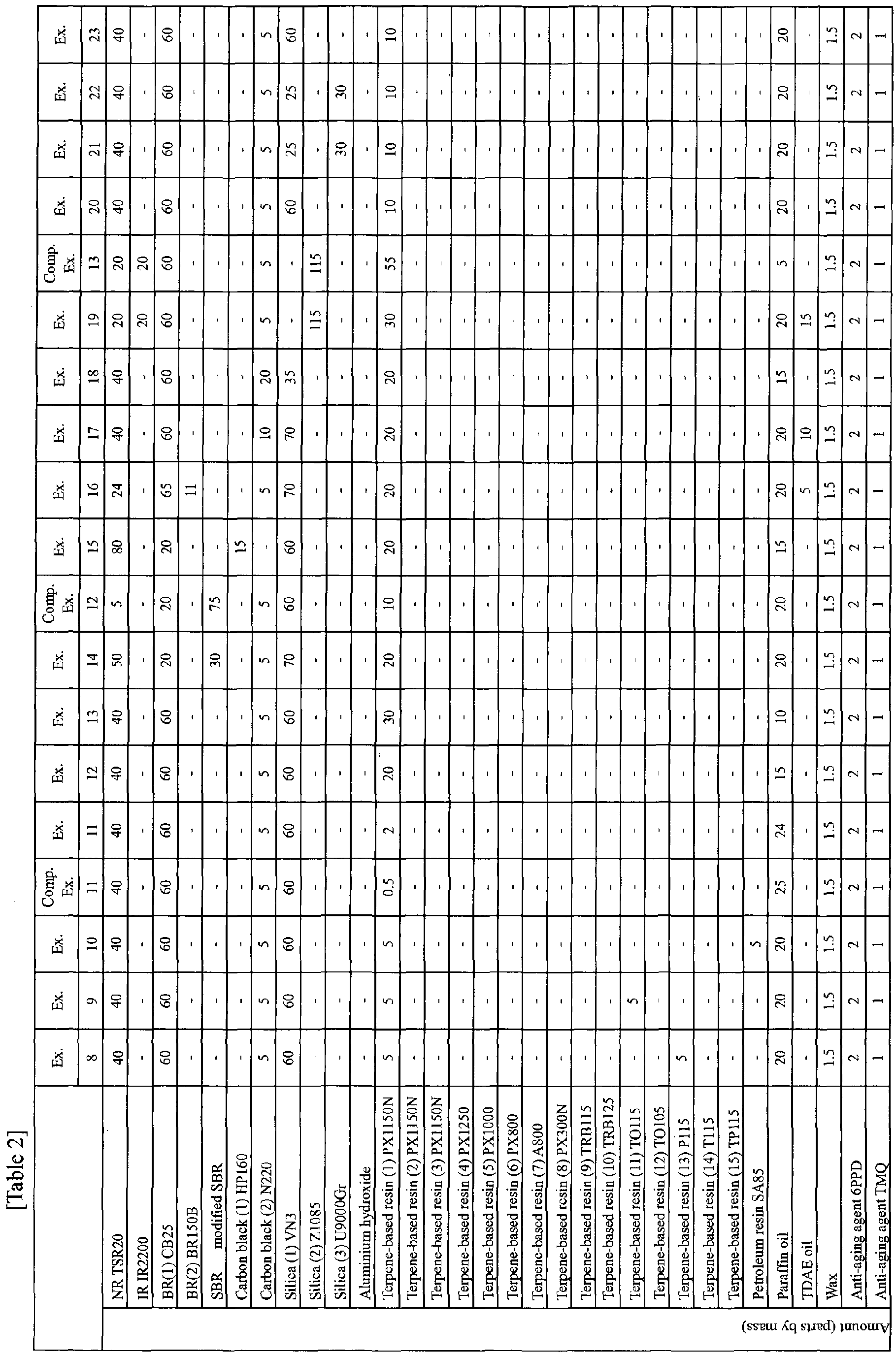

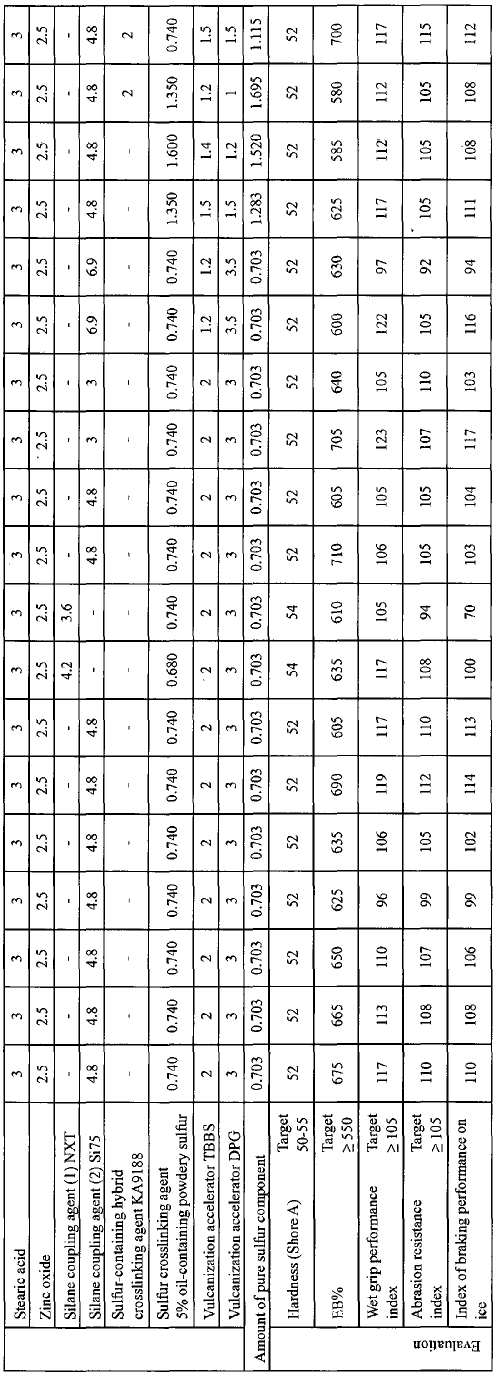

According to Tables 1 and 2, in examples where a predetermined amount of the terpene-based resin having a specific hydroxyl value and softening point was blended in the rubber component in which the isoprene-based rubber, the BR and the SBR were each contained by an amount within a given range, wet grip performance, abrasion resistance, and elongation at break were improved as compared to comparative example 10 that was used as a reference. Further, according to comparison among examples and comparative examples where hardness was the same, braking performance on ice tends to be more excellent in examples.

## Claims

1. A rubber composition for a tire, wherein
the content of an isoprene-based rubber in 100% by mass of a rubber component ranges from 10% by mass to 100% by mass,
the content of a butadiene rubber in 100% by mass of the rubber component ranges from 0% by mass to 80% by mass,
the content of a styrene butadiene rubber in 100% by mass of the rubber component ranges from 0% by mass to 70% by mass, and
the content of a terpene-based resin having a hydroxyl value that is less than or equal to 20 and a softening point ranging from 106°C to 124°C ranges from 1 part by mass to 50 parts by mass, per 100 parts by mass of the rubber component,
wherein the rubber composition further includes silica and carbon black, wherein the total content of silica and carbon black ranges from 60 parts by mass to 140 parts by mass, per 100 parts by mass of the rubber component.

2. The rubber composition, for a tire, according to claim 1, wherein an SP value of the terpene-based resin is less than or equal to 8.6.

3. The rubber composition, for a tire, according to one of claims 1 and 2, wherein
a content of the isoprene-based rubber in 100% by mass of the rubber component ranges from 25% by mass to 65% by mass,
a content of the butadiene rubber in 100% by mass of the rubber component ranges from 35% by mass to 75% by mass, and
a content of the terpene-based resin in 100 parts by mass of the rubber component ranges from 1 part by mass to 30 parts by mass.

4. The rubber composition, for a tire, according to one of claims 1 to 3, wherein the hydroxyl value of the terpene-based resin is less than or equal to 15.

5. The rubber composition, for a tire, according to one of claims 1 to 4, wherein an amount of a pure sulfur component derived from a crosslinking agent is less than or equal to 1.30 parts by mass, per 100 parts by mass of the rubber component.

6. The rubber composition, for a tire, according to one of claims 1 to 5, wherein the rubber composition is used for a tread.

7. A pneumatic tire produced by using the rubber composition according to one of claims 1 to 6.

## Patentansprüche

1. Kautschukzusammensetzung für einen Reifen, wobei
der Gehalt an auf Isopren basierendem Kautschuk in 100 Massen-% einer Kautschukkomponente in einem Bereich von 10 Massen-% bis 100 Massen-% liegt,
der Gehalt eines Butadienkautschuks in 100 Massen-% der Kautschukkomponente in einem Bereich von 0 Massen-% bis 80 Massen-% liegt,
der Gehalt an Styrol-Butadien-Kautschuk in 100 Massen-% der Kautschukkomponente in einem Bereich von 0 Massen-% bis 70 Massen-% liegt,
der Gehalt eines auf Terpen basierenden Harzes, das einen Hydroxylwert, der kleiner als oder gleich 20 ist, und einen Erweichungspunkt aufweist, der in einem Bereich von 106°C bis 124°C liegt, in einem Bereich von 1 Massenteil bis 50 Massenteile bezogen auf 100 Massenteile der Kautschukkomponente liegt,
wobei die Kautschukzusammensetzung ferner Silica und Ruß umfasst, wobei der Gesamtgehalt an Silica und Ruß in einem Bereich von 60 Massenteile bis 140 Massenteile bezogen auf 100 Massenteile der Kautschukkomponente liegt.

2. Kautschukzusammensetzung für einen Reifen nach Anspruch 1, wobei ein SP-Wert des auf Terpen basierenden Harzes kleiner als oder gleich 8,6 ist.

3. Kautschukzusammensetzung für einen Reifen nach einem der Ansprüche 1 und 2, wobei
ein Gehalt des auf Isopren basierenden Kautschuks in 100 Massen-% der Kautschukkomponente in einem Bereich von 25 Massen-% bis 65 Massen-% liegt,
ein Gehalt des Butadienkautschuks in 100 Massen-% der Kautschukkomponente in einem Bereich von 35 Massen-% bis 75 Massen-% liegt, und
ein Gehalt des auf Terpen basierenden Harzes in 100 Massenteile der Kautschukkomponente in einem Bereich von 1 Massenteil bis 30 Massenteile liegt.

4. Kautschukzusammensetzung für einen Reifen nach einem der Ansprüche 1-3, wobei der Hydroxylwert des auf Terpen basierenden Harzes kleiner als oder gleich 15 ist.

5. Kautschukzusammensetzung für einen Reifen nach einem Ansprüche 1-4, wobei eine Menge einer reinen Schwefelkomponente, die aus einem Quervernetzungsmittel abgeleitet ist, kleiner als oder gleich 1,30 Massenteile bezogen auf 100 Massenteile der Kautschukkomponente ist.

6. Kautschukzusammensetzung für einen Reifen nach einem der Ansprüche 1-5, wobei die Kautschukzusammensetzung für eine Lauffläche verwendet wird.

7. Luftreifen, der unter Verwendung der Kautschukzusammensetzung nach einem der Ansprüche 1-6 hergestellt ist.

## Revendications

1. Composition de caoutchouc pour pneu, dans laquelle
la teneur d'un caoutchouc à base d'isoprène dans 100 % en masse d'un composant de caoutchouc est située dans la plage de 10 % en masse à 100 % en masse,
la teneur d'un caoutchouc de butadiène dans 100 % en masse du composant de caoutchouc est située dans la plage de 0 % en masse à 80 % en masse,
la teneur d'un caoutchouc de styrène butadiène dans 100 % en masse du composant de caoutchouc est située dans la plage de 0 % en masse à 70 % en masse, et
la teneur d'une résine à base de terpène ayant un indice d'hydroxyle qui est inférieur ou égal à 20 et un point de ramollissement situé dans la plage de 106 °C à 124 °C est située dans la plage de 1 partie en masse à 50 parties en masse, pour 100 parties en masse du composant de caoutchouc,
laquelle composition de caoutchouc inclut en outre de la silice et du noir de carbone, la teneur totale de la silice et du noir de carbone étant située dans la plage de 60 parties en masse à 140 parties en masse, pour 100 parties en masse du composant de caoutchouc.

2. Composition de caoutchouc, pour pneu, selon la revendication 1, dans laquelle une valeur SP de la résine à base de terpène est inférieure ou égale à 8,6.

3. Composition de caoutchouc, pour pneu, selon l'une quelconque des revendications 1 et 2, dans laquelle
une teneur du caoutchouc à base d'isoprène dans 100 % en masse du composant de caoutchouc est située dans la plage de 25 % en masse à 65 % en masse,
une teneur du caoutchouc de butadiène dans 100 % en masse du composant de caoutchouc est située dans la plage de 35 % en masse à 75 % en masse, et
une teneur de la résine à base de terpène dans 100 parties en masse du composant de caoutchouc est située dans la plage de 1 partie en masse à 30 parties en masse.

4. Composition de caoutchouc, pour pneu, selon l'une quelconque des revendications 1 à 3, dans laquelle l'indice d'hydroxyle de la résine à base de terpène est inférieure ou égale à 15.

5. Composition de caoutchouc, pour pneu, selon l'une quelconque des revendications 1 à 4, dans laquelle une quantité d'un composant à base de soufre pur dérivé d'un agent de réticulation est inférieure ou égale à 1,30 partie en masse, pour 100 parties en masse du composant de caoutchouc.

6. Composition de caoutchouc, pour pneu, selon l'une quelconque des revendications 1 à 5, laquelle composition de caoutchouc est utilisée pour une bande de roulement.

7. Pneu produit en utilisant la composition de caoutchouc selon l'une quelconque des revendications 1 à 6.
